(19)

Europäisches
Patentamt
European
Patent Office
Office européen
des brevets

(11)  **EP 4 675 737 A1**

(12)  **EUROPEAN PATENT APPLICATION**
published in accordance with Art. 153(4) EPC

(43) Date of publication:
**07.01.2026 Bulletin 2026/02**

(21) Application number: **23924881.8**

(22) Date of filing: **24.08.2023**

(51) International Patent Classification (IPC):
*H01M 10/0525* (2010.01)   *H01M 10/058* (2010.01)
*H01M 4/62* (2006.01)

(52) Cooperative Patent Classification (CPC):
Y02E 60/10; Y02P 70/50

(86) International application number:
**PCT/CN2023/114670**

(87) International publication number:
**WO 2024/178924 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  27.02.2023  CN 202310225635

(71) Applicant: **Sunwoda Mobility Energy Technology
Co., Ltd.
Shenzhen, Guangdong 518107 (CN)**

(72) Inventors:
• **SONG, Feifei
Shenzhen, Guangdong 518107 (CN)**
• **HUANG, Kaisheng
Shenzhen, Guangdong 518107 (CN)**
• **FENG, Jing
Shenzhen, Guangdong 518107 (CN)**

(74) Representative: **Elzaburu S.L.P.
Edificio Torre de Cristal
Paseo de la Castellana 259 C, planta 28
28046 Madrid (ES)**

(54)  **RECHARGEABLE BATTERY, PREPARATION METHOD AND ELECTRIC DEVICE**

(57)   A secondary battery, a preparation method, and an electric device. The secondary battery includes a positive electrode plate, a separator, a negative electrode plate and an electrolyte, where the negative electrode plate includes a lithium metal sheet and a modification layer disposed on at least one surface of the lithium metal sheet, and the modification layer includes phosphate and lithium metal alloy. The surface of the lithium metal sheet is provided with the modification layer which can effectively conduct lithium ions, and the lithium metal alloy is able to achieve uniform deposition of lithium ions, prevent the growth of lithium dendrites, and improve the electrochemical and safety performance of the battery.

AxPO₄ Nanoparticles → Charging → Modification layer (Li₃PO₄+Li-A alloy) → After cycling for multiple times → No generation of lithium dendrites

FIG. 2

## Description

This application claims priority to Chinese Patent Application No. CN202310225635.0, filed with the China National Intellectual Property Administration on February 27, 2023, and entitled with "SECONDARY BATTERY, PREPARATION METHOD AND ELECTRIC DEVICE", which is hereby incorporated by reference in its entirety.

## TECHNICAL FIELD

The present application relates to the field of electrochemical technology, and in particular, to a secondary battery, a preparation method, and an electric device.

## BACKGROUND

Lithium ion batteries, as highly efficient energy storage devices that convert electrical energy into chemical energy and vice versa, have been successfully applied in 3C electronic devices due to the advantages of high energy density, long service life, stable performance, and environmental friendliness. With the continuous expansion of the market, the demands for batteries with higher energy density and longer cycle life are steadily increasing. Current battery systems using graphite (372 mAh/g) as the negative electrode cannot meet industry development requirements due to their low energy density. Lithium metal, due to its ultra-high theoretical specific capacity (3860 mAh/g), ultra-low potential (-3.04 V), and ultra-low density ($0.534 \text{ g/cm}^3$), has made it possible to use higher-energy batteries.

## SUMMARY

### Technical Problem

An object of the present application is to provide a secondary battery, a preparation method, and an electric device. In the secondary battery of the present application, a modification layer is provided on the surface of the lithium metal sheet, where the modification layer can effectively conduct lithium ions during charging and prevent the growth of lithium dendrite, thereby enhancing the electrochemical and safety performance of the battery.

### Technical Solution

In the first aspect, a secondary battery is provided, including a positive electrode plate, a separator, a negative electrode plate and an electrolyte, where the negative electrode plate includes a lithium metal sheet and a modification layer disposed on at least one surface of the lithium metal sheet, and the modification layer includes a phosphate and a lithium metal alloy.

In some embodiments, the modification layer includes an organic compound which includes one or more groups of carbon-carbon double bond, epoxy group, and benzene ring.

In some embodiments, the organic compound has a mass proportion of 1%-30% based on a mass of the modification layer.

In some embodiments, the organic compound includes one or more of polyethylene, polystyrene, and polyethylene oxide

In some embodiments, the lithium metal alloy includes A element, where the A element includes one or more of Sb, Zn, Mg, Al, Sn, Zr, Bi, Ag, In, Se, B, and Si.

In some embodiments, the lithium metal alloy includes $Li_{3/x}A$, where x has a value of 0.5-3.

In some embodiments, the molar ratio of lithium element in the modification layer to lithium element in the lithium metal sheet is (0.01-0.2):1.

In some embodiments, the modification layer has a thickness of 500 nm to 10 $\mu$m.

In the second aspect, the present application further provides a preparation method of a secondary battery, including the steps of:

   assembling a battery with a positive electrode plate, a separator, and a lithium metal sheet with a surface coated with phosphate; where the phosphate has a particle size of 50 nm to 500 nm;
   performing a formation of the battery to obtain a secondary battery with a negative electrode plate, where the negative electrode plate includes a phosphate and a lithium alloy.

In some embodiments, a preparation method of the lithium metal sheet with a surface coated with phosphate includes:

dispersing the phosphate and an organic compound in an organic solvent to obtain a dispersing solution;
coating the dispersing solution onto the surface of the lithium metal sheet, drying, and then obtaining the lithium metal sheet with a surface coated with phosphate.

In some embodiments, the organic compound includes one or more of polyethylene, polystyrene, and polyethylene oxide.

In some embodiments, the phosphate in the dispersing solution has a mass percentage concentration of 5%-80%.

In the third aspect, the present application also provides an electric device, including the secondary battery described above or a secondary battery prepared by the preparation method described above.

**Advantageous Effects**

The secondary battery of the present application includes a positive electrode plate, a separator, a negative electrode plate and an electrolyte, where the negative electrode plate includes a lithium metal sheet and a modification layer disposed on at least one surface of the lithium metal sheet, and the modification layer includes a phosphate and a lithium metal alloy. For the secondary battery of the present application, a modification layer is provided on the surface of the lithium metal sheet, where the modification layer can effectively conduct lithium ions and the lithium metal alloy enables uniform deposition of lithium ions to prevent the growth of lithium dendrites; and the introduction of organic compounds could enhance the stability of the modification layer and improve the wettability of the electrode plate, thereby effectively increasing the electrochemical and safety performance of the battery.

**BRIEF DESCRIPTION OF DRAWINGS**

FIG. 1 shows a charging cycle process of a lithium metal sheet as a negative electrode plate in the prior art.
FIG. 2 shows a charging cycle process of a negative electrode plate in embodiments of the present application.

**DESCRIPTION OF EMBODIMENTS**

The present application provides a secondary battery, a preparation method, and an electric device. To make the objectives, technical solutions, and effects of the present application clearer and more explicit, the present application is further described in detail below with reference to the accompanying drawings and embodiments.

Lithium metal exhibits significantly higher activity than other negative electrode materials, readily reacting with electrolytes in either liquid-state or solid-state batteries. Additionally, during charging process, non-uniform deposition of lithium leads to the growth of dendrites, which can puncture the separator or solid electrolyte, causing short circuit or even battery explosion. To deal with lithium dendrites generated during using the lithium metal sheet as a negative electrode material, the present application provides a secondary battery including a positive electrode plate, a separator, a negative electrode plate, and an electrolyte, where the negative electrode plate includes a lithium metal sheet and a modification layer disposed on at least one surface of the lithium metal sheet, and the modification layer includes a phosphate and a lithium metal alloy.

In this embodiment, the phosphate includes lithium phosphate. The lithium phosphate in the modification layer of the present application is a fast ionic conductor, which could efficiently conduct the lithium ions. The lithium metal alloy in the modification layer of the present application performs alloying/dealloying reaction during battery cycling, in which the uniform deposition of lithium ions is induced during alloying process, thereby preventing growth of lithium dendrites and facilitating enhancing the electrochemical and safety performance.

In some embodiments, the lithium metal alloy includes A element, where the A element includes one or more of Sb, Zn, Mg, Al, Sn, Zr, Bi, Ag, In, Se, B, and Si. The alloy formed by these elements and lithium enables deintercalation of lithium ions to be more uniform during battery cycling, suppressing the growth of lithium dendrites and further enhancing the safety performance of the battery.

In some embodiments, the modification layer includes an organic compound which includes one or more of the following groups: carbon-carbon double bond, epoxy group, and benzene ring. In some embodiments, the organic compound is selected from one or more of polyethylene, polystyrene, and polyethylene oxide (PEO).

In the modification layer of the present application, the introduction of the functional group of organic compound can increase the stability of the modification layer. Meanwhile, due to the organic compound including carbon-carbon double bond, epoxy group, and benzene ring, which are polar groups and interact with the organic functional group in the electrolyte, the wettability of the negative electrode plate can be increased and the electrochemical and safety performance of the battery can be effectively enhanced.

In some embodiments, the organic compound has a mass proportion of 1%-30% based on the mass of the modification layer. For example, the organic compound has a mass proportion of 1%-10%, 1%-20%, and 10%-20%. In some embodiments, the organic compound has a mass proportion of any of 1%, 2%, 3%, 5%, 10%, 15%, 20%, 25%, and 30%, or a range formed by any two thereof, based on the mass of the modification layer.

The level of the content of the organic compound directly impacts the stability and wettability performance of the modification layer. When the organic compound falls within the aforementioned ranges, it can further optimize the performance of the modification layer, improve the stability and wettability of the modification layer and avoid affecting the migration efficiency of lithium ions, such that the battery performance is further optimized. In battery systems, when the electrolyte has poor wetting effect on the electrode plate, the ion transport path becomes longer, which hinders the shuttling of lithium ion between the positive and negative electrodes; and the electrode plate that is not in contact with the electrolyte cannot participate in the battery's electrochemical reactions and the battery's interface impedance increases, thereby affecting the rate performance, discharge capacity, and service life of the lithium battery.

In some embodiments, the lithium metal alloy includes $Li_{3/x}A$, where x is 0.5-3.

In some embodiments, x is selected from any of 0.5, 1.5, 2, 2.5, and 3, or a range formed by any two thereof.

The Li3/xA in the modification layer of the present application enables uniform deposition of lithium ions, preventing growth of lithium dendrites. Meanwhile, the presence of Li3/xA reduces the activity of the lithium metal sheet and enhances interface stability.

In some embodiments, the molar ratio of lithium phosphate to lithium metal alloy is 1:(0.5-3).

In some embodiments, the molar ratio of lithium phosphate to lithium metal alloy is any of 1:0.5, 1:1, 1:1.5, 1:2, 1:2.5, and 1:3, or a range between any two of these values.

In some embodiments, the molar ratio of lithium element in the modification layer to lithium element in the lithium metal sheet is (0.01-0.2):1. For example, the molar ratio of lithium element in the modification layer to lithium element in the lithium metal sheet is any of 0.01:1, 0.02:1, 0.03:1, 0.04:1, 0.05:1, 0.06:1, 0.07:1, 0.08:1, 0.09:1, 0.1:1, 0.12:1, 0.14:1, 0.15:1, and 0.2:1, or a range formed by any two of these values.

When the ratio of lithium molar content in the modification layer to that in the lithium metal sheet falls within the above range, it can ensure the migration efficiency of lithium ions by the modification layer and reduce impedance value, thereby preventing growth of lithium dendrites and enhancing the cycling performance and rate performance of the battery.

In some embodiments, the modification layer has the thickness of 500 nm to 10 $\mu$m.

In the present embodiment, the thickness of the modification layer refers to a thickness of the modification layer on a single side of the negative electrode plate. If the modification layer is disposed on both sides of the negative electrode plate, the thickness on each side of the negative electrode plate is between 500 nm and 10 $\mu$m. When the thickness of the modification layer falls within the above range, it could ensure the impedance value of the negative electrode plate within an appropriate range, while taking into account the migration rate of lithium ions, thereby further optimizing the electrochemical performance of the battery.

In some embodiments, the modification layer has a thickness of any of 500 nm, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, and 10 $\mu$m, or a range between any two of them.

The embodiments of the present application also provide a preparation method of the aforementioned secondary battery, including the steps of:

assembling a battery with a positive electrode plate, a separator, and a lithium metal sheet with a surface coated with phosphate AxPO4; where the phosphate has a particle size of 50 nm to 500 nm;
performing a formation of the battery to obtain a secondary battery with a negative electrode plate.

In some embodiments, step (S1) includes:

placing an organic compound and a normal phosphate in an organic solvent to obtain a dispersing solution, where the organic compound includes one or more of polyethylene, polystyrene, or polyethylene oxide; spraying or coating the dispersing solution onto the surface of the lithium metal sheet, or immersing the lithium metal sheet in the dispersing solution; and obtaining a modified lithium metal negative electrode after drying. In the present embodiment, the particle size of phosphate is controlled within 50 nm to 500 nm, which facilitates uniform dispersion of the phosphate and increases the uniform degree of the modification layer.

In the present application, the AxPO$_4$ will decompose to generate lithium phosphate and A during the first charging cycle; and the alloying/dealloying reactions occur in subsequent cycles, that is, the generation and decomposition of the Li3/xA alloy.

The reaction process is: $A_xPO4 + 3Li^+ + 3e^- \rightarrow xA + Li_3PO_4$ ;

$$A + \frac{3}{x}Li^+ + \frac{3}{x}e^- \leftrightarrow Li_{3/x}A$$

.

In some embodiments, the coating amount of the dispersing solution on the lithium metal sheet is: 10 μL/cm2 to 100 μL/cm2.

In some embodiments, the coating amount (μL/cm$^2$) of the dispersing solution on the lithium metal sheet is any value of 10, 20, 30, 40, 50, 60, 70, 80, 90, 100, or a range between any two of these values.

In some embodiments, the phosphate in the dispersing solution has a mass percentage concentration of 5%-80%.

In some embodiments, the phosphate in the dispersing solution has a mass percentage concentration (%) of any value of 5, 15, 25, 35, 45, 55, 65, 75, and 80, or a range between any two of these values.

In some embodiments, the organic solvent is selected from one or more of xylene, p-xylene, o-xylene, n-hexane, cyclopentane, cyclopentane, tetrahydrofuran, ethyl acetate, butyl acetate, acetonitrile, and acetone.

In some embodiments, the phosphate is a nanoparticle; preferably, the nanoparticle has a particle size of 50 nm to 500 nm.

In some embodiments, the nanoparticle has a particle size (nm) of any value of 50, 100, 150, 200, 250, 300, 350, 400, 450, and 500, or a range between any two of these values.

In some embodiments, the temperature for drying is 50°C-100°C, the duration of drying is 30 min to 10 h, and the drying is performed under an inert atmosphere.

In some embodiments, the lithium metal sheet with a surface coated with phosphate is produced in a glove box full of argon gas with a water content <0.1 ppm and an oxygen content <0.1 ppm.

In some embodiments, the positive electrode plate includes a positive electrode current collector and a positive electrode active material, a binder, and a conductive agent that are coated on the positive current collector. The types and contents of the conductive agent and binder are not specifically limited and may be selected based on actual requirements. In some embodiments, the conductive agent may include conductive carbon black, carbon nanotubes, graphene, etc., and the binder may include polyvinylidene fluoride.

In some embodiments, the preparation of the positive electrode plate includes: dispersing the positive electrode active material, the conductive agent, and the binder in N-methylpyrrolidone (NMP) in a specific ratio; coating the resulting slurry onto an aluminum foil; and drying, then cold-pressing and slitting to obtain the positive electrode plate.

In some embodiments, the main component of the electrolyte includes lithium salt, organic solvent, and additive; where the types and compositions of the lithium salt and organic solvent are not specifically limited and can be selected based on actual requirements. The lithium salt may include lithium hexafluorophosphate; and the solvent may include one or more of ethylene carbonate, methyl ethyl carbonate, dimethyl carbonate, and propyl propionate.

In some embodiments, the type of separator is not specifically limited and can be selected based on actual requirements. The separator may be polypropylene film, polyethylene film, polyvinylidene fluoride, spandex film, aramid film, or a multilayer composite film modified by coating.

In some embodiments, the preparation of the secondary battery includes: stacking the positive electrode plate, the separator, and the negative electrode plate in sequence, placing the separator between the positive and negative electrode plates for isolating the plates; winding them into a square rolling-core, then performing hot and cold pressing, and placing into a housing of battery; then drying at 65°C-95°C to remove moisture, injecting electrolyte and sealing; and obtaining the secondary battery after the processes of resting, formation, and capacity grading.

In some embodiments, the secondary battery of the present application may be a liquid-state lithium battery, a semi-solid-state lithium battery, a solid-state lithium battery, a lithium-sulfur battery, or a lithium-air battery.

The present application also provides an electric device including the aforementioned secondary battery, where the electric device includes, but is not limited to, backup power supplies, motors, electric vehicles, electric motorcycles, power-assisted bicycles, bicycles, power tools, and large household storage batteries.

Multiple experiments have been conducted for the present application. Some of experimental results are provided as references for further detailed description of the present application, and the detailed description is provided below with reference to specific embodiments. It should be understood that these embodiments are only used to illustrate the present application and not to limit the scope of the present application.

Example 1

Preparation of a negative electrode plate: in a glove box filled with argon gas, phosphate (zinc phosphate) with an average particle size of 100 nm is dispersed in an organic solvent xylene to obtain a 10% phosphate dispersing solution; this dispersing solution is coated onto two-sided surfaces of a lithium metal negative electrode with a coating amount of 50 μL/cm2, followed by drying at 60°C for 4 h to obtain a modified lithium metal negative electrode as the negative electrode plate.

Preparation of a positive electrode plate: lithium nickel cobalt manganese oxide, conductive carbon black, and PVDF are mixed in a weight ratio of 90:5:5 and dissolved in NMP; and mixed evenly, and then coated onto carbon-coated aluminum foil (two-sided coating, 14 μm); and an electrode plate is subjected to baking, rolling, slitting, and cutting to obtain the positive electrode plate.

Separator: polyethylene film.

Electrolyte: LiPF6 is dissolved in a mixed solvent at VEC: VDMC: VDEC=1: 1: 1 to obtain the electrolyte, with LiPF6 concentration of 1 mol/L.

The positive and negative electrode plates prepared in the present application are separated by the separator and wound into corresponding rolling-core. After the processes of shaping, welding, assembling, baking, injecting electrolyte, formation, and capacity grading are performed, a pouch lithium-ion battery is obtained.

The parameter of battery formation consists in: charging at 0.05C current for 20 h, and forming a modification layer on the surface of the negative electrode plate during charging.

Examples 2-11

The preparation method of these examples is the same as that of Example 1, the difference being that the type of phosphate and the concentration of the phosphate dispersing solution are changed to obtain a modification layer containing different types of lithium alloy and different ratios of lithium phosphate to lithium alloy, as detailed in Table 1.

Examples 12-19

The preparation method of these examples is the same as that of Example 1, the difference being that the proportion of lithium element in the modification layer and the thickness of the modification layer are controlled by adjusting the coating amount of the dispersing solution, and the specific parameters are shown in Table 1.

Examples 20-26

The preparation method of these examples is the same as that of Example 1, the difference being that an organic compound is added into the dispersing solution, and the remaining preparation methods are the same as that of Example 1.

Comparative Example 1

The preparation method of this example is the same as that of Example 1, the difference being that the process of preparing and coating of the phosphate dispersing solution is omitted during the preparation of negative electrode plate, and the resulting battery is free of a modification layer.

Comparative Example 2

The preparation method of this example is the same as that of Example 1, the difference being that zinc phosphate is replaced by zinc chloride, and the specific parameters are shown in Table 1.

Test of Performance Parameters:

Cycling capacity retention rate: a battery is subjected to a room-temperature cycling test at 25±5°C as follows: charging the battery to 4.35V at 0.5C constant current, and charging at 4.35V constant voltage to a cutoff current of 0.05C, then discharging to 2.8V at 1C constant current, repeating this charge-discharge cycle until the capacity retention rate is below 80%, recording the number of cycles at the endpoint and completing the test.

Test method of DC resistance of battery: at 25±5°C, the battery is rested for 5 minutes, and subjected to charging to 4.2V at a constant current of 1C rate, and then a constant-voltage charging until the current is less than or equal to 0.05C, the state of charge (SOC) being 100% at this point; after another 5-minute resting, the battery is subjected to discharging at a constant current of 1C rate to adjust the state of charge (SOC) of battery to 50%. After resting the battery at 50% SOC for 10 minutes, it is subjected to discharging at a constant current of 4C rate for 30 seconds. The voltage U1 at the final second of resting, the voltage U2 at the final second of discharging at the 4C constant current, and the current I of discharging at the 4C constant current are recorded. The DC resistance R of battery at 25% and 50% SOC and 30-second 4C constant-current discharging is calculated as: R = (U2 - U1) / I.

Table 1 Parameters and Test Results of Examples 1-26 and Comparative Examples 1-2

| | Proportion of an organic compound in a modification layer | Type of phosphate | Lithium phosphate: Lithium metal alloy (Molar ratio) | Li in the modification layer: Li in a lithium metal sheet (Molar ratio) | Thickness of the modification layer ($\mu$m) | Cycling capacity retention rate (%) (500 cycles) | Battery DC resistance (m$\Omega$) |
|---|---|---|---|---|---|---|---|
| Example 1 | / | zinc phosphate | lithium phosphate: zinc/lithium alloy=1: 1.5 | 0.02 | 1.25 | 70.78 | 2.3 |
| Example 2 | / | magnesium phosphate | lithium phosphate: magnesium/lithium alloy=1: 1.5 | 0.02 | 1.25 | 68.25 | 2.5 |
| Example 3 | / | antimony phosphate | lithium phosphate: antimony/lithium alloy=1: 1 | 0.02 | 1.25 | 69.67 | 2.6 |
| Example 4 | / | aluminum phosphate | lithium phosphate: aluminum/lithium alloy=1: 1 | 0.02 | 1.25 | 63.62 | 2.5 |
| Example 5 | / | zirconium phosphate | lithium phosphate: zirconium/lithium alloy=1: 2 | 0.02 | 1.25 | 62.23 | 2.4 |
| Example 6 | / | bismuth phosphate | lithium phosphate: bismuth/lithium alloy=1: 1 | 0.02 | 1.25 | 55.40 | 2.2 |
| Example 7 | / | silver phosphate | lithium phosphate: sliver/lithium alloy=1: 3 | 0.02 | 1.25 | 66.74 | 2.0 |
| Example 8 | / | indium phosphate | lithium phosphate: indium/lithium alloy=1: 1 | 0.02 | 1.25 | 60.58 | 2.1 |
| Example 9 | / | selenium phosphate | lithium phosphate: selenium/lithium alloy=1: 3 | 0.02 | 1.25 | 68.22 | 2.3 |
| Example 10 | / | boron phosphate | lithium phosphate: boron/lithium alloy=1: 1 | 0.02 | 1.25 | 64.58 | 3.3 |
| Example 11 | / | silicon phosphate | lithium phosphate: silicon/lithium alloy=1: 0.75 | 0.02 | 1.25 | 59.25 | 3.5 |
| Example 12 | / | zinc phosphate | lithium phosphate: zinc/lithium alloy=1: 1.5 | 0.01 | 0.5 | 55.32 | 1.8 |
| Example 13 | / | zinc phosphate | lithium phosphate: zinc/lithium alloy=1: 1.5 | 0.04 | 2.4 | 72.79 | 2.5 |
| Example 14 | / | zinc phosphate | lithium phosphate: zinc/lithium alloy=1: 1.5 | 0.07 | 3.7 | 78.62 | 2.6 |

(continued)

| | Proportion of an organic compound in a modification layer | Type of phosphate | Lithium phosphate: Lithium metal alloy (Molar ratio) | Li in the modification layer: Li in a lithium metal sheet (Molar ratio) | Thickness of the modification layer (μm) | Cycling capacity retention rate (%) (500 cycles) | Battery DC resistance (mΩ) |
|---|---|---|---|---|---|---|---|
| Example 15 | / | zinc phosphate | lithium phosphate: zinc/lithium alloy=1: 1.5 | 0.09 | 4.5 | 80.07 | 2.8 |
| Example 16 | / | zinc phosphate | lithium phosphate: zinc/lithium alloy=1: 1.5 | 0.15 | 7.9 | 79.70 | 3.0 |
| Example 17 | / | zinc phosphate | lithium phosphate: zinc/lithium alloy=1: 1.5 | 0.2 | 10 | 72.30 | 3.2 |
| Example 18 | / | zinc phosphate | lithium phosphate: zinc/lithium alloy=1: 1.5 | 0.005 | 0.3 | 52.4 | 1.5 |
| Example 19 | / | zinc phosphate | lithium phosphate: zinc/lithium alloy=1: 1.5 | 0.25 | 13 | 51.1 | 3.8 |
| Example 20 | 0.5%PEO | zinc phosphate | lithium phosphate: zinc/lithium alloy=1: 1.5 | 0.02 | 1.25 | 72.9 | 1.90 |
| Example 21 | 1%PEO | zinc phosphate | lithium phosphate: zinc/lithium alloy=1: 1.5 | 0.02 | 1.25 | 73.5 | 1.85 |
| Example 22 | 3%PEO | zinc phosphate | lithium phosphate: zinc/lithium alloy=1: 1.5 | 0.02 | 1.25 | 76.6 | 1.80 |
| Example 23 | 10%PEO | zinc phosphate | lithium phosphate: zinc/lithium alloy=1: 1.5 | 0.02 | 1.25 | 82.5 | 1.6 |
| Example 24 | 20%PEO | zinc phosphate | lithium phosphate: zinc/lithium alloy=1: 1.5 | 0.02 | 1.25 | 83.4 | 1.4 |
| Example 25 | 30%PEO | zinc phosphate | lithium phosphate: zinc/lithium alloy=1: 1.5 | 0.02 | 1.25 | 73.8 | 1.3 |
| Example 26 | 35% styrene | zinc phosphate | lithium phosphate: zinc/lithium alloy=1: 1.5 | 0.02 | 1.25 | 70.5 | 1.2 |
| Comparative Example 1 | / | / | lithium metal sheet | / | / | 42.39 | 2.8 |
| Comparative Example 1 | / | zinc chloride | lithium chloride: zinc/lithium alloy=1: 1.5 | 0.02 | 1.25 | 40.48 | 5.8 |

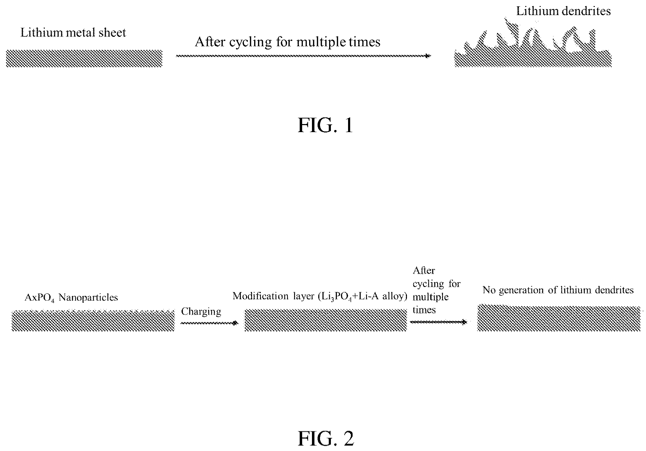

As can been seen from the results of Table 1, according to data of Examples 1-17, the cycling performance of batteries with the modification layer is better than that of Comparative Example 1, and different types of modification layers have different effects, zinc, magnesium, antimony, silver, and boron having better effects, which may be attributed to stronger affinity of these element with lithium, leading to easier formation of lithium alloys. Comparing Example 1 with Examples 12-17, it can be seen that as the thickness of the modification layer increases, the cycling retention rate of the battery increases first and then decreases, which shows that selecting an appropriate thickness for the modification layer is crucial. Comparing Example 1 with Comparative Example 2, it is found that the cycling performance of Example 1 is significantly superior to that of Comparative Example 2, which is mainly due to the presence of the modification layer. As shown in FIGS. 1-2, the modification layer of the present application can protect the negative electrode plate during cycling and prevent the growth of lithium dendrites, thereby substantially enhancing the cycling capability of the battery.

As can been seen from the data of Example 1 and Examples 16-26, DC resistance of battery can be reduced when there is an organic compound in the modification layer. This is because the present of organic compound can enhance the wettability of the negative electrode plate such that the internal resistance of the battery is lowered. When the content of organic compound falls within a certain range, it can effectively enhance the cycling life of the battery. Although higher content of organic compound can cause the internal resistance of the battery to be lower, excessively high content of organic compound causes a decrease in the proportion of phosphate and lithium alloy in the modification layer, which can easily deteriorate the cycling performance of the battery and shorten cycling life of the battery. Therefore, the content of organic compound needs to be controlled within a reasonable range.

In the above Examples, the description of each Example emphasizes specific aspects. Details omitted in certain Example can be referred to the relevant descriptions in other Examples.

The foregoing provides a detailed introduction to the secondary battery, preparation method, and electric device disclosed in the embodiments of the present application. Specific examples have been used herein to illustrate the principles and implementation methods of the present application. The description of the above embodiments is intended solely to aid in understanding the methods and core concepts of the present application. At the same time, those skilled in the art may make modifications to the specific implementation methods and application scope based on the ideas of this application. In summary, the content of this specification should not be construed as limiting the present application.

**Claims**

1. A secondary battery, comprising a positive electrode plate, a separator, a negative electrode plate and an electrolyte, wherein the negative electrode plate comprises a lithium metal sheet and a modification layer disposed on at least one surface of the lithium metal sheet, the modification layer comprising a phosphate and a lithium metal alloy.

2. The secondary battery according to claim 1, wherein the modification layer comprises an organic compound, the organic compound comprising one or more groups of carbon-carbon double bond, epoxy group, and benzene ring.

3. The secondary battery according to claim 2, wherein the organic compound has a mass proportion of 1%-30% based on a mass of the modification layer.

4. The secondary battery according to claim 2, wherein the organic compound comprises one or more of polyethylene, polystyrene, and polyethylene oxide.

5. The secondary battery according to claim 1, wherein the lithium metal alloy comprises A element, the element A comprising one or more of Sb, Zn, Mg, Al, Sn, Zr, Bi, Ag, In, Se, B, and Si.

6. The secondary battery according to claim 5, wherein the lithium metal alloy comprises $Li_{3/x}A$, x having a value of 0.5-3.

7. The secondary battery according to claim 1, wherein a molar ratio of lithium element in the modification layer to lithium element in the lithium metal sheet is (0.01-0.2): 1.

8. The secondary battery according to claim 1, wherein the modification layer has a thickness of 500 nm to 10 $\mu$m.

9. A preparation method of a secondary battery, comprising steps of:

assembling a battery with a positive electrode plate, a separator, and a lithium metal sheet with a surface coated with phosphate, wherein the phosphate has a particle size of 50 nm to 500 nm;
performing a formation of the battery to obtain a secondary battery with a negative electrode plate, the negative electrode plate comprising phosphate and lithium alloy.

**10.** The preparation method of the secondary battery according to claim 9, wherein the lithium metal sheet with the surface coated with phosphate is prepared by:

dispersing the phosphate and an organic compound in an organic solvent to obtain a dispersing solution; coating the dispersing solution onto a surface of the lithium metal sheet, and drying and then obtaining the lithium metal sheet with the surface coated with phosphate.

**11.** The preparation method of the secondary battery according to claim 10, wherein the organic compound comprises one or more of polyethylene, polystyrene, and polyethylene oxide.

**12.** The preparation method of the secondary battery according to claim 10, wherein the phosphate in the dispersing solution has a mass percentage concentration of 5%-80%.

**13.** An electric device, comprising the secondary battery according to any one of claims 1-8 or a secondary battery prepared by the preparation method according to any one of claims 9-12.

Lithium metal sheet — After cycling for multiple times — Lithium dendrites

FIG. 1

AxPO$_4$ Nanoparticles — Charging — Modification layer (Li$_3$PO$_4$+Li-A alloy) — After cycling for multiple times — No generation of lithium dendrites

FIG. 2

## INTERNATIONAL SEARCH REPORT

| International application No. |
| --- |
| **PCT/CN2023/114670** |

### A. CLASSIFICATION OF SUBJECT MATTER

H01M10/0525(2010.01)i; H01M10/058(2010.01)i; H01M4/62(2006.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI: 电池, 负极, 锂金属, 修饰层, 磷酸盐, 锂金属合金, 化成, battery, negative electrode, lithium metal, modified layer, phosphate, lithium metal alloy, formation

### C. DOCUMENTS CONSIDERED TO BE RELEVANT

| Category* | Citation of document, with indication, where appropriate, of the relevant passages | Relevant to claim No. |
| --- | --- | --- |
| PX | CN 116417657 A (SUNWODA ELECTRIC VEHICLE BATTERY CO., LTD.) 11 July 2023 (2023-07-11)<br>description, paragraphs 4-73 | 1-13 |
| X | CN 115692706 A (INSTITUTE OF CHEMISTRY, CHINESE ACADEMY OF SCIENCES) 03 February 2023 (2023-02-03)<br>description, paragraphs 2 and 9-79 | 1, 5-9, 13 |
| Y | CN 115692706 A (INSTITUTE OF CHEMISTRY, CHINESE ACADEMY OF SCIENCES) 03 February 2023 (2023-02-03)<br>description, paragraphs 2 and 9-79 | 2-4, 10-12 |
| Y | CN 105280886 A (INSTITUTE OF CHEMISTRY, CHINESE ACADEMY OF SCIENCES) 27 January 2016 (2016-01-27)<br>description, paragraphs 7-17 | 2-4, 10-12 |
| X | CN 109585947 A (ANHUI MENGWEI NEW ENERGY TECHNOLOGY CO., LTD.) 05 April 2019 (2019-04-05)<br>description, paragraphs 2 and 43-100 | 1, 5-8, 13 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 November 2023** | **25 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/114670**

### C. DOCUMENTS CONSIDERED TO BE RELEVANT

| Category* | Citation of document, with indication, where appropriate, of the relevant passages | Relevant to claim No. |
|---|---|---|
| Y | CN 109585947 A (ANHUI MENGWEI NEW ENERGY TECHNOLOGY CO., LTD.) 05 April 2019 (2019-04-05)<br>     description, paragraphs 2 and 43-100 | 2-4 |
| Y | CN 115101837 A (HUNAN WEISHENG NEW MATERIAL TECHNOLOGY CO., LTD.) 23 September 2022 (2022-09-23)<br>     description, paragraphs 6-20 | 2-4, 10-12 |
| A | JP 2018037380 A (TOYOTA INDUSTRIES CORP.) 08 March 2018 (2018-03-08)<br>     entire document | 1-13 |

Form PCT/ISA/210 (second sheet) (July 2022)

**INTERNATIONAL SEARCH REPORT**
Information on patent family members

International application No.

**PCT/CN2023/114670**

| Patent document cited in search report | | | Publication date (day/month/year) | Patent family member(s) | | | Publication date (day/month/year) |
|---|---|---|---|---|---|---|---|
| CN | 116417657 | A | 11 July 2023 | None | | | |
| CN | 115692706 | A | 03 February 2023 | None | | | |
| CN | 105280886 | A | 27 January 2016 | CN | 105280886 | B | 15 May 2018 |
| CN | 109585947 | A | 05 April 2019 | CN | 109585947 | B | 29 January 2021 |
| CN | 115101837 | A | 23 September 2022 | None | | | |
| JP | 2018037380 | A | 08 March 2018 | JP | 7026433 | B2 | 28 February 2022 |

Form PCT/ISA/210 (patent family annex) (July 2022)

**EP 4 675 737 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310225635